# EUROPÄISCHE PATENTSCHRIFT

(11) **EP 3 990 322 B1**
(45) Veröffentlichungstag und Bekanntmachung des Hinweises auf die Patenterteilung: **01.05.2024**
(21) Anmeldenummer: 20733720.5
(22) Anmeldetag: 15.06.2020
(51) Int. Cl.: B60T 13/66, G01P 21/00, G01C 25/00, G01P 15/18

(54) **VERFAHREN ZUR KALIBRIERUNG DER ORIENTIERUNG EINES IN EINEM FAHRZEUG VORGESEHENEN BESCHLEUNIGUNGSSENSORS**
METHOD FOR CALIBRATING THE ORIENTATION OF AN ACCELERATION SENSOR PROVIDED IN A VEHICLE
PROCÉDÉ D'ÉTALONNAGE DE L'ORIENTATION D'UN CAPTEUR D'ACCÉLÉRATION DISPOSÉ DANS UN VÉHICULE

(30) Priorität: 25.06.2019 DE 102019117089
(43) Veröffentlichungstag der Anmeldung: 04.05.2022
(73) Patentinhaber: KNORR-BREMSE Systeme für Schienenfahrzeuge GmbH, 80809 München (DE)
(72) Erfinder: FRIESEN, Ulf, 85579 Neubiberg (DE); FURTWÄNGLER, Ralf, 81379 München (DE); DEEKEN, Dirk, 80995 München (DE)
(86) Internationale Anmeldenummer: PCT/EP2020/066460
(87) Internationale Veröffentlichungsnummer: WO 2020/260049

(56) Entgegenhaltungen:
- EP-A1- 2 853 901
- WO-A1-2006/026751
- WO-A1-2017/042138
- DE-A1-102005 033 237
- US-A1- 2013 081 442

## Beschreibung

Das Verfahren betrifft ein Verfahren zur Kalibrierung der Orientierung eines in einem Fahrzeug vorgesehenen Beschleunigungssensors, insbesondere ein Verfahren zur Kalibrierung der Orientierung eines Koordinatensystems eines mehrachsigen Beschleunigungssensors in einem Schienenfahrzeug, eine Vorrichtung, welche dazu konfiguriert ist das Verfahren durchzuführen und ein Computerprogrammprodukt, welches dazu konfiguriert ist das Verfahren automatisiert durchzuführen.

In modernen Fahrzeugen, insbesondere Schienenfahrzeugen, werden Verzögerungsregelungen eingesetzt, um eine ökonomische, komfortable und sichere Bremsung gewährleisten zu können. Derartige Regelungen sind beispielsweise in den Patentdokumenten DE 10 2015 110 053 A1 oder DE 10 2011 052 545 beschrieben und benötigen zur Regelung der Verzögerung ein IST-Verzögerungssignal des Fahrzeugs in Fahrzeuglängsrichtung,

Ein solches Signal kann beispielsweise anhand von Beschleunigungssensoren, welche in den Zügen verbaut sind, ermittelt werden. Die Beschleunigung in Fahrzeuglängsrichtung muss dabei bei geneigten Gleisen gegebenenfalls um den Teil der Hangabtriebskraft korrigiert werden. Eine Erfassung der Längsbeschleunigung des Fahrzeugs kann dabei durch exakt in Fahrzeuglängsrichtung orientierte einachsige Sensoren erfolgen.

Aus dem Stand der Technik ist ferner das Dokument DE 10 2005 033 237 A1 bekannt, welches ein Verfahren zum Bestimmen von Fehlorientierungen von Sensoren eines Sensorclusters eines Fahrzeugs offenbart. Hier werden durch Vergleich von durch die Sensoren gemessenen Werten unter unterschiedlichen Bedingungen mit für diese unterschiedlichen Bedingungen bekannten Werten im fahrzeugfesten kartesischen Koordinatensystem die wirklichen Einbaurichtungen der Sensoren bestimmt.

Dokument WO 2017/042138 A1 offenbart ein Verfahren zum Feststellen einer Orientierung einer Sensoreinheit, wobei die Sensoreinheit zumindest einen Beschleunigungssensor aufweist und in einem Fahrzeug eingebaut ist.

Dokument EP 2 853 901 A1 offenbart ein Telematiksystem, das unter anderem einen Dreiachsen-Beschleunigungsmesser, der einem beweglichen Objekt zugeordnet und zum Erzeugen von Ausrichtungsdaten konfiguriert ist, aufweist.

Dokument US 2013/0081442 A1 offenbart ein Fahrzeugüberwachungssystem mit einem Beschleunigungsmesser, der in einer unbekannten Ausrichtung im Fahrzeug installiert ist. Das System schließt aus den Beschleunigungssignalen auf die Ausrichtung des Beschleunigungsmessers im Fahrzeug.

Die Installation exakt ausgerichteter Sensoren ist allerdings sehr aufwendig, einschränkend hinsichtlich der Positionierung der Sensoren und unkomfortabel. Alternativ zu einachsigen Sensoren können auch mehrachsige Beschleunigungssensoren (insbesondere zweiachsige oder dreiachsige Sensoren) verwendet werden. Insbesondere bei Verwendung von Sensoren mit mindestens drei Achsen können diese beliebig orientiert im Fahrzeug verbaut sein. Derartige Sensoren sind beispielsweise in einem Steuergerät (Bremssteuerung) integriert, welches in seiner Orientierung beliebig im Fahrzeug angeordnet sein kann.

Mehrachsige Sensoren haben allerdings den Nachteil, dass sie zunächst auf das Koordinatensystem des Fahrzeugs kalibriert werden müssen, um die Beschleunigungen in Längs- oder Querrichtung des Zuges exakt bestimmen zu können. Eine solche Kalibrierung wird vorzugsweise auf einem nivellierten Gleisabschnitt durchgeführt, der keine Kurvenradien, Gleisüberhöhungen (Querneigung der Gleise) oder Steigungen aufweisen darf. Auf diese Weise können Anteile in Längs- bzw. Querrichtung des Sensors, die aufgrund der Erdbeschleunigung auf unebenen Gleisen in der Längs- bzw. Querbeschleunigung des Fahrzeugs entstehen und somit eine Verfälschung der Kalibrierung bedeuten würden, ausgeschlossen werden. Beliebige reale, augenscheinlich ebene und gerade Streckenabschnitte, bei denen Kurvenradien, Gleisüberhöhungen und Steigungen bzw. Gefälle jedoch nicht ausgeschlossen werden können, eignen sich daher nicht für eine Kalibrierung des Sensors. Aufgrund der Tatsache, dass eine Kalibrierung des Sensors auf die Fahrzeuglängsachse nur bei einer dynamischen Bewegung des Fahrzeugs durchgeführt werden kann, ist es zudem notwendig, dass der nivellierte Gleisabschnitt möglichst deutlich länger ist als eine Fahrzeuglänge.

Derartige Gleisabschnitte sind im realen Streckennetz eher selten verfügbar und ein Transport des Fahrzeugs zu einem kalibrierten Gleisabschnitt und damit auch die Kalibrierung sind mit großem zeitlichen, logistischen und monetären Aufwand verbunden.

Es ist daher Aufgabe der vorliegenden Erfindung ein Verfahren sowie eine dazugehörige Vorrichtung zur Kalibrierung der Orientierung einer Längsachse und einer Querachse eines in einem Fahrzeug vorgesehenen Beschleunigungssensors bereitzustellen, das es ermöglicht eine genaue Kalibrierung ohne die Verwendung von nivellierten Gleisabschnitten durchzuführen und damit die Kosten und den zeitlichen Aufwand für die Kalibrierung zu verringern.

Die Aufgabe wird durch ein Verfahren, eine Vorrichtung und ein Computerprogrammprodukt gemäß den unabhängigen Ansprüchen gelöst. Vorteilhafte Weiterbildungen der Erfindung sind in den abhängigen Ansprüchen enthalten.

Eine Vertikalachse des Sensors steht senkrecht auf einer Querachse und einer Längsachse des Sensors, welche wiederum ebenfalls aufeinander senkrecht stehen, was sich aus den Bezeichnungen ergibt. Die drei Achsen zusammen ergeben also das Koordinatensystem des Sensors, welches anhand des erfindungsgemäßen Verfahrens auf das Koordinatensystem des Fahrzeugs, das sich ebenfalls aus 3 aufeinander senkrecht stehenden Achsen (Längsachse, Querachse, Vertikalachse) zusammensetzt, kalibriert wird. Das erfindungsgemäße Verfahren besteht aus mehreren Schritten.

Im ersten Verfahrensschritt (Verfahrensschritt (A)) wird beim Abbremsen des Fahrzeugs auf einem beliebig gewählten Streckenabschnitt bei geringen Geschwindigkeiten und im Stillstand die Beschleunigung in Richtung der Längs- und Querachse (Längsrichtung bzw. Querrichtung) des Sensors über den zeitlichen Verlauf gemessen. Aus den Beschleunigungsverläufen können Beschleunigungsvektoren durch die Entnahme jeweils eines Wertes der Beschleunigung in Längsrichtung und in Querrichtung des Sensors zum jeweils gleichen Zeitpunkt gebildet werden. Der Betrag des Beschleunigungsvektors stellt damit den Betrag der gemessenen Beschleunigung des Fahrzeugs zu diesem Zeitpunkt dar.

In einem nächsten Schritt (Verfahrensschritt (B)) wird ein Offsetvektor, der einem gemessenen Beschleunigungsvektor im Stillstand entspricht, bestimmt. Dieser beinhaltet also eine Beschleunigung in Längs- und Querrichtung des Sensors hervorgerufen durch eine Hangabtriebskraft aufgrund einer Neigung oder Steigung bzw. Gefälle des Gleisabschnittes auf dem sich das Fahrzeug im Stillstand befindet. Ist dieser Gleisabschnitt exakt eben, so beträgt der Offsetvektor 0 m/s². Er stellt also den Einfluss der Erdbeschleunigung auf die gemessene Beschleunigung in Längs- bzw. Querrichtung des Sensors dar und tritt daher lediglich auf, wenn der Gleisabschnitt auf dem sich das Fahrzeug befindet nicht eben ist.

Anschließend wird in einem weiteren Verfahrensschritt (Verfahrensschritt (C) mindestens ein gemessener Beschleunigungsvektor von einem Zeitpunkt der Bremsung, also während das Fahrzeug in Bewegung ist, durch die Subtraktion des Offsetvektors von dem Einfluss der Erdbeschleunigung (Hangabtriebskraft) auf die Beschleunigung in Längs- bzw. Querrichtung des Sensors bereinigt. Der daraus resultierende Beschleunigungsvektor entspricht damit der gemessenen Längsverzögerung des Fahrzeugs.

In einem abschließenden Schritt wird das Koordinatensystem des Sensors derart transformiert, dass der mindestens eine resultierende Beschleunigungsvektor in Fahrzeuglängsrichtung, also in Richtung der Längsachse des Koordinatensystems des Fahrzeugs zeigt.

In einer vorteilhaften Ausführungsform wird zur Transformation des Koordinatensystems des Sensors auf das Koordinatensystem des Fahrzeugs der Winkel zwischen der Längsachse des Sensors und dem mindestens einen resultierenden Beschleunigungsvektor in der aus der Längsachse und Querachse des Sensors aufgespannten Ebene berechnet. Der mindestens eine resultierende Beschleunigungsvektor ist dabei der im Schritt zuvor durch den Offsetvektor bereinigte Beschleunigungsvektor. Im Falle mehrerer ermittelter resultierender Beschleunigungsvektoren und deren Mittelung zu einem gemittelten resultierenden Beschleunigungsvektor, wird der Winkel zwischen der Längsachse des Sensors und dem gemittelten resultierenden Beschleunigungsvektor in der aus der Längsachse und der Querachse des Sensors aufgespannten Ebene berechnet.

Abschließend wird das Koordinatensystem des Sensors um die bereits kalibrierte Vertikalachse des Sensors um den berechneten Winkel gedreht. Somit wird die Längsachse des Sensors mit der Längsachse des Fahrzeugs in Übereinstimmung gebracht und die Achse wurde entsprechend kalibriert. Da per Definition die Längsachse senkrecht auf der Querachse steht ist somit auch gewährleistet, dass die Querachse des Sensors mit der Querachse des Fahrzeugs übereinstimmt. Das Verfahren kann im laufenden Betrieb stetig oder in Intervallen durchgeführt und somit eine Kalibrierung des Sensors stetig oder in Intervallen erneuert werden.

In einer weiteren vorteilhaften Ausführungsform der Erfindung wird zur Transformation des Koordinatensystems des Sensors (Verfahrensschritt (D) eine Rotationsmatrix für die Drehung des Koordinatensystems des Sensors um die Vertikalachse ermittelt. Die Rotationsmatrix setzt sich dabei aus zu ermittelnden Einheitsvektoren des mindestens einen resultierenden Beschleunigungsvektors in Richtung der Längs- und Querachse des Sensors zusammen.

In einer vorteilhaften Ausführungsform der Erfindung wird vor dem ersten Verfahrensschritt (A), also vor der Beschleunigungsaufnahme des Fahrzeugs in Längs- und Querrichtung bei niedrigen Geschwindigkeiten, eine Vertikalachse des Sensors auf die Vertikalachse des Fahrzeugs kalibriert. Die Vertikalachse des Sensors steht dabei sowohl auf der Querachse als auch auf der Längsachse des Sensors senkrecht.

Weiter vorteilhaft ist es, das Kalibrieren der Vertikalachse des Sensors auf einem nivellierten und/oder kalibrierten Messgleis und/oder bei Stillstand des Schienenfahrzeugs vorzunehmen. Der nivellierte Gleisabschnitt muss dabei nicht länger sein als der Teil des Schienenfahrzeugs in dem der Sensor verbaut ist. Eine derartige Kalibrierung kann somit bereits bei der Fertigstellung des Schienenfahrzeugs durchgeführt werden. Durch die Kalibrierung auf einem nivellierten Gleisabschnitt kann gewährleistet werden, dass der Sensor lediglich die Erdbeschleunigung, die rein in vertikaler Richtung auf den Sensor wirkt, erfasst. Auf diese Weise kann die Vertikalachse des Sensors leicht kalibriert werden.

In einer vorteilhaften Ausführungsform der Erfindung befindet sich der in Verfahrensschritt (C) ermittelte mindestens eine resultierende Beschleunigungsvektor in einem Kalibrierungsfenster. Das Kalibrierungsfenster ist ein Zeitfenster mit einem festgelegten Beginn und einem festgelegten Ende, die beide jeweils zeitlich in Abhängigkeit der gemessenen Beschleunigungsverläufe verschoben werden können. Zudem können Anfang und Ende des Kalibrierungsfensters beispielsweise durch den Anhalteruck des Fahrzeugs beim Anhalten oder anhand festgelegter Geschwindigkeitswerte, an denen das Fenster anfängt oder endet bestimmt werden.

Innerhalb des Kalibrierungsfensters liegen alle zur Kalibrierung herangezogenen Beschleunigungsvektoren. Auf diese Weise lassen sich Abschnitte des Bremsvorgangs, die eine Verfälschung der Kalibrierung nach sich ziehen könnten, wie beispielsweise Bereiche in denen das Fahrzeug eine zu hohe oder zu geringe Geschwindigkeit aufweist, aus der Kalibrierung ausschließen, was die Qualität des Ergebnisses verbessert.

In einer vorteilhaften Ausführungsform der Erfindung werden die in Verfahrensschritt (A) gemessenen Beschleunigungsverläufe gefiltert, um mögliches Messrauschen oder andere Messfehler aus den Beschleunigungsverläufen zu eliminieren und damit die Qualität der Ergebnisse der Kalibrierung weiter zu verbessern. Besonders vorteilhaft ist dabei eine Filterung durch einen Tiefpassfilter, der die hochfrequenten Anteile des gemessenen Beschleunigungsverlaufs eliminiert.

In einer weiteren vorteilhaften Ausführungsform wird in Verfahrensschritt (C) mehr als lediglich ein resultierender Beschleunigungsvektor ermittelt. Anschließend werden die die einzeln ermittelten resultierenden Beschleunigungsvektoren gemittelt. Die Transformation des Koordinatensystems des Koordinatensystems erfolgt dann anhand des gemittelten resultierenden Beschleunigungsvektors, so dass dieser in Fahrzeuglängsrichtung, also in Richtung der Längsachse des Fahrzeugs zeigt. Eine derartige Ausführungsform hat den Vorteil, dass mehrere Beschleunigungsvektoren innerhalb des Kalibrierungsfensters berücksichtigt werden, wodurch Messungenauigkeiten bei einzelnen Beschleunigungsvektoren das Ergebnis weniger stark verfälschen. Außerdem können auf diese Weise möglicherweise vorhandene leichte Unterschiede in den Neigungen der Gleise in Längs- bzw. Querrichtung (Steigungen bzw. Gleisüberhöhungen) während des Kalibrierungsfensters ausgeglichen werden.

In einer weiteren vorteilhaften Ausführungsform der Erfindung wird der Offsetvektor in Verfahrensschritt (B) über Mittelwertbildung von verschiedenen erfassten Beschleunigungsvektoren gebildet. Die Beschleunigungsvektoren setzen sich aus einem Anteil in Längsrichtung und einem Anteil in Querrichtung des Sensors zusammen und befinden sich innerhalb eines festgelegten Offsetfensters, das ein Zeitfenster darstellt innerhalb dessen sich das Fahrzeug im Stillstand befindet und das beispielsweise anhand des Anhalterucks des Fahrzeugs festgelegt werden kann. Auf diese Weise können Messungenauigkeiten während des Stillstands des Fahrzeugs reduziert werden und ein möglichst genauer Offsetvektor ermittelt werden.

In einer vorteilhaften Ausführungsform der Erfindung wird vor der Messwertaufnahme in Verfahrensschritt (A) mindestens eine Vorbedingung überprüft. Diese lauten beispielsweise: die Geschwindigkeit des Fahrzeugs ist größer als eine festgelegte minimale Geschwindigkeit und/oder die von einem Bremssystem des Fahrzeugs angelegte Sollverzögerung ist größer als eine festgelegte Mindestsollverzögerung, beispielsweise 0,8 m/s². Auf diese Weise kann die Wahrscheinlichkeit, dass eine Messwertaufnahme ungenaue Ergebnisse hervorbringt, verringert und somit die Qualität der Kalibrierung erhöht werden. Ist wenigstens eine dieser Bedingungen nicht erfüllt wird die Kalibrierung für ungültig erklärt und abgebrochen.

Weiterhin vorteilhaft ist eine Ausführungsform der Erfindung in der nach der Messwertaufnahme der Beschleunigungsverläufe in Verfahrensschritt (A) bestimmten Nebenbedingungen überprüft werden. Beispielsweise kann als Bedingung festgelegt werden, dass eine Geschwindigkeit des Fahrzeugs beim Messen der Beschleunigungsverläufe größer ist als eine festgelegte Minimalgeschwindigkeit.

Weitere Bedingungen könnten lauten, dass jeder der gemessenen Beschleunigungsvektoren einen Betrag aufweist der größer ist als eine minimale Beschleunigung, beispielsweise 0,6 m/s², oder dass die Bremsung bis zum Stillstand des Fahrzeugs durchgeführt wird.

Um sicherzustellen, dass der im Stillstand gemessene Offsetvektor realistisch ist, kann weiterhin als Bedingung festgelegt werden, dass der gemessene Offsetvektor nicht um mehr als einen festgelegten Betrag von der Erdbeschleunigung abweichen darf.

Verschiedene Bedingungen können dabei, sofern sie sich nicht widersprechen, beliebig miteinander kombiniert und wenn nötig angepasst werden. Eine derartige Ausführungsform hat den Vorteil, dass Kalibrierungen aufgrund unrealistischer Messungen durch die gesetzten Bedingungen für ungültig erklärt und ausgeschlossen werden können.

In einer weiteren vorteilhaften Ausführungsform der Erfindung wird nach Verfahrensschritt (D) nur dann fortgeführt, wenn die Beträge zweier beliebiger resultierender Beschleunigungsvektoren und/oder deren in Verfahrensschritt (D) bestimmten Winkel nicht um mehr als einen festgelegten Betrag, beispielsweise 3° voneinander abweichen. Derartige Nebenbedingungen können auch in diesem Fall ungültige bzw. ungenaue Kalibrierungen identifizieren und diese ausschließen.

In einer alternativen Ausführungsform wird die Messwertaufnahme entlang der Längsachse und der Querachse des Sensors gemäß dem Verfahrensschritt (A) beim Beschleunigen aus dem Stillstand vorgenommen. Die Auswertung der aufgenommenen Messwerte erfolgt dann analog zu dem oben geschilderten Vorgehen.

In einer vorteilhaften Ausführungsform der Erfindung wird weiterhin das Verfahren im regulären Betrieb des Fahrzeugs stetig oder in festgelegten Intervallen durchgeführt. Dies hat den Vorteil, dass das Sensorkoordinatensystem stetig neu ausgerichtet wird und damit eine genaue Bestimmung der Fahrzeugbeschleunigung zu jeder Zeit möglich ist.

Die erfindungsgemäße Vorrichtung ist dazu konfiguriert das Verfahren gemäß Anspruch 1 durchzuführen und weist eine Bedienungseinheit auf, die dazu konfiguriert ist von einem Bediener bedient zu werden und von ihm Befehle entgegenzunehmen. Zudem weist sie eine Speichereinheit, die dazu konfiguriert ist die während dem Verfahren erhobenen Daten zu speichern, eine Recheneinheit, die dazu konfiguriert ist die während dem Verfahren erhobenen Daten zu verarbeiten, und eine Datenschnittstelle, die dazu konfiguriert ist sowohl die vom Sensor erfassten Daten aufzunehmen, als auch von der Vorrichtung ermittelte und/oder bearbeitete Daten an den Bediener oder andere Systeme auszugeben, auf.

Das erfindungsgemäße Computerprogrammprodukt ist dazu konfiguriert die Verfahrensschritte gemäß Anspruch 1 automatisiert durchzuführen und so eine automatische Kalibrierung des Sensors zu gewährleisten.

Im Folgenden wird die Erfindung anhand einer Ausführungsform unter Hinzuziehung der beigefügten Figuren näher erläutert. Die Figuren zeigen im Einzelnen:
- **Figur 1**: zeigt schematisch ein Schienenfahrzeug und einen darin beliebig orientierten Beschleunigungssensor
- **Figur 2**: zeigt gemessene Verläufe des Beschleunigungssensors in seinen drei Koordinatenachsen und einen zugehörigen gemessenen Geschwindigkeitsverlauf.
- **Figur 3a**: zeigt drei gemessene Beschleunigungsvektoren zu unterschiedlichen Zeitpunkten während der Bremsung und im Stillstand des Fahrzeugs zur Kalibrierung des Beschleunigungssensors
- **Figur 3b**: zeigt zwei durch den Offsetvektor bereinigte Beschleunigungsvektoren
- **Figur 4**: zeigt die vom Beschleunigungssensor gemessenen Verläufe der Beschleunigungen aus Figur 2, die durch einen Tiefpassfilter gefiltert und durch den Offsetvektor bereinigt wurden
- **Figur 5**: zeigt ein Ablaufdiagramm zur Darstellung des Ablaufs einer Ausführungsform des erfindungsgemäßen Verfahrens

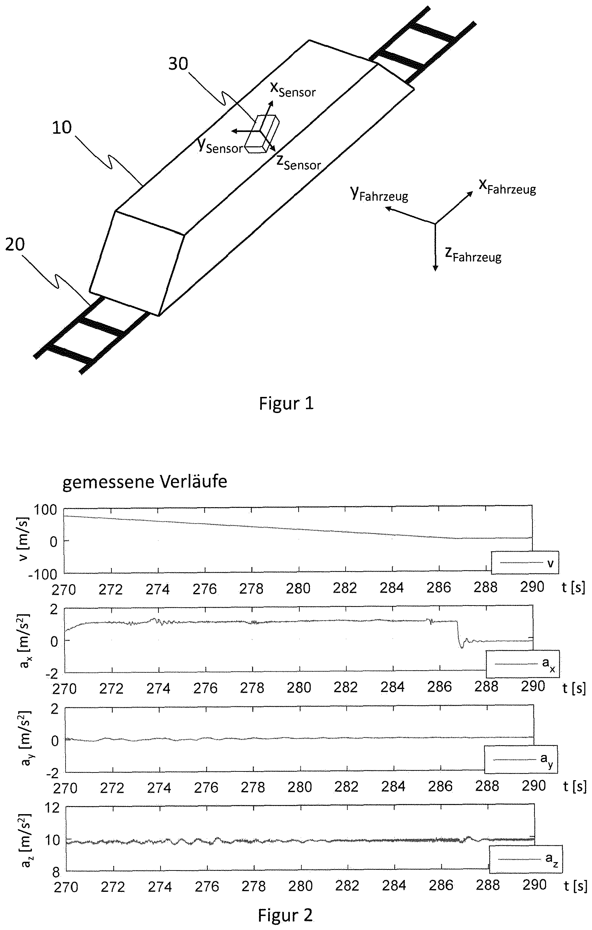

**Figur 1** zeigt ein Schienenfahrzeug (10) auf einem Gleis (20) und mit einem in dem Schienenfahrzeug (10) beliebig orientiert eingebauten Beschleunigungssensor (30). Die Orientierung des Koordinatensystems (x_{Sensor}, y_{Sensor}, z_{Sensor}) des Sensors (30) entspricht dabei nicht der des Koordinatensystems (x_{Fahrzeug}, y_{Fahrzeug}, z_{Fahrzeug}) des Schienenfahrzeugs (10). Um eine Beschleunigung des Fahrzeugs (10) in dessen Längsrichtung (x_{Fahrzeug}) bzw. Querrichtung (y_{Fahrzeug}) mit dem Beschleunigungssensor (30) zu erfassen, muss das Koordinatensystem des Sensors (30) zunächst auf das Koordinatensystem des Fahrzeugs kalibriert werden. Dies bedeutet, dass die entsprechenden Koordinatenachsen der jeweiligen Koordinatensysteme parallel zueinander orientiert sein müssen. Dazu wird definiert, dass die x-Achse des Sensors (x_{Sensor}) der x-Achse des Fahrzeugs (x_{Fahrzeug}), also der Fahrzeuglängsachse, die y-Achse des Sensors (y_{Sensor}) der y-Achse des Fahrzeugs (y_{Fahrzeug}), also der Fahrzeugquerachse, und die z-Achse des Sensors (z_{Sensor}) der z-Achse des Fahrzeugs (z_{Fahrzeug}), also der Fahrzeugvertikalachse, entsprechen soll.

Zunächst wird dazu die Vertikalachse z_{Sensor} des Sensors auf die Vertikalachse z_{Fahrzeug} des Fahrzeugs kalibriert. Dabei wird der Teil des Fahrzeugs, in dem der Beschleunigungssensor verbaut ist, auf einen nivellierten Gleisabschnitt gestellt, der keine Gleisüberhöhungen oder Neigung aufweist und damit vollständig eben ist. Die in diesem Zustand vom Beschleunigungssensor erfasste Beschleunigung entspricht dabei der bekannten Erdbeschleunigung, die ausschließlich in der Vertikalrichtung des Fahrzeugs wirkt. Das Koordinatensystem des Sensors kann somit derart ausgerichtet werden, dass die Vertikalachse des Sensors parallel zur Vertikalachse des Fahrzeugs orientiert ist.

Anschließend wird die Kalibrierung der beiden übrigen Achsen x_{Sensor} und y_{Sensor} des Sensors auf die Längs- bzw. Querachse (x_{Fahrzeug} bzw. y_{Fahrzeug}) des Fahrzeugs vorgenommen. Dazu werden im Betrieb oder während einer Inbetriebsetzungsfahrt des Fahrzeugs die Beschleunigungsverläufe des Sensors in x- bzw. y-Richtung erfasst und beim Bremsvorgang in einem Geschwindigkeitsbereich mit niedrigen Geschwindigkeiten und im nachfolgenden Stillstand ausgewertet. Durch die Auswertung im kleinen Geschwindigkeitsbereich können Einflüsse von möglicherweise durchfahrenen Kurvenradien der Gleise reduziert werden. Vor einer erfolgreichen Kalibrierung werden die Sensorsignale im System nicht verwendet.

**Figur 2** zeigt die gemessenen Beschleunigungsverläufe in den drei Koordinatenrichtungen (x_{Sensor}, y_{Sensor}, z_{Sensor}) des Sensors und den dazugehörigen Geschwindigkeitsverlauf über der Zeit. Die Geschwindigkeit des Fahrzeugs nimmt linear ab, während die Beschleunigungsverläufe mit Ausnahme vom Bremsbeginn und dem Erreichen des Stillstandes annähernd konstant sind. Die Verläufe repräsentieren also einen Bremsvorgang des Fahrzeugs mit einer nahezu konstanten Verzögerung. Dabei ist die Verzögerung in x-Richtung des Sensors im Vergleich zur Verzögerung in y-Richtung deutlich größer. Um die Daten besser verarbeiten zu können werden sie anhand eines Tiefpassfilters gefiltert, der die hochfrequenten Anteile der Verläufe, die beispielsweise durch Messrauschen zustande kommen können, eliminiert.

Die Auswertung beginnt mit der Definition eines Kalibrierungsfensters und eines Offsetfensters. Anfang und Ende der beiden Fenster kann dabei beispielsweise über den Anfahr- bzw. Anhalteruck des Fahrzeugs definiert werden. Die Dauer der Zeitfenster kann zusätzlich abhängig von den Messergebnissen oder den Gleisgegebenheiten eingestellt werden. Die Definition des Kalibrierungsfensters kann dabei so erfolgen, dass der Anfang des Kalibrierungsfensters durch einen festgelegten Zeitraum, beispielsweise 5s, vor dem Zeitpunkt des erfassten Anhalterucks definiert wird. Das Ende des Kalibrierungsfensters wird dann durch einen zweiten festgelegten kleineren Zeitraum, beispielsweise 1s, vor dem Zeitpunkt des Anhalterucks bestimmt. Durch ein analoges Vorgehen kann ebenfalls das Offsetfenster definiert werden.

Eine weitere Möglichkeit zur Definition des Kalibrierungsfensters besteht darin festgelegte Schwellenwerte für die Geschwindigkeit des Fahrzeugs festzulegen, an denen das Kalibrierungsfenster beginnt bzw. endet. Beispielsweise kann definiert werden, dass das Fenster beginnt, wenn das Fahrzeug mit einer Geschwindigkeit von 2m/s fährt und das Fenster endet wenn das Fahrzeug lediglich mit einer Geschwindigkeit von 0,5m/s fährt.

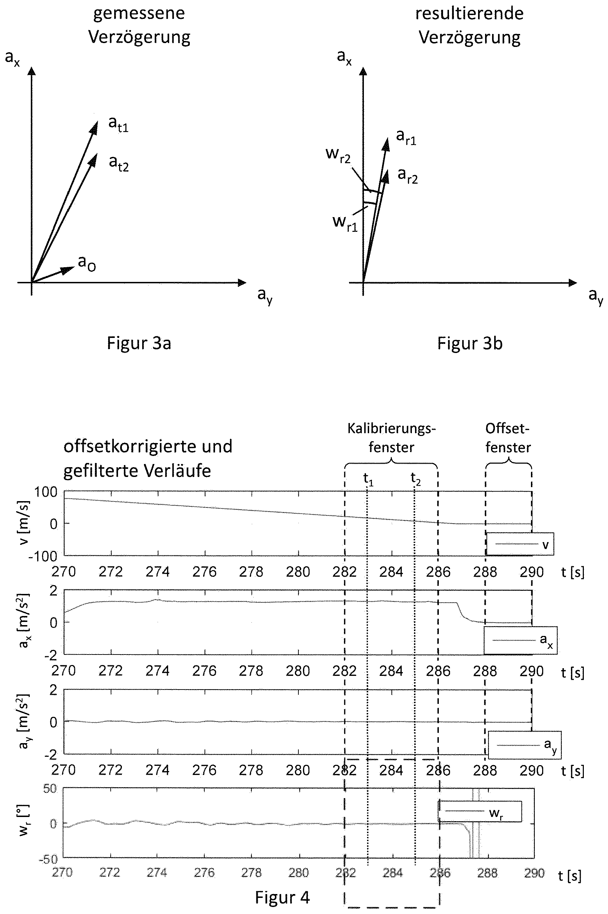

Für die Kalibrierung des Sensors werden ausschließlich die Verläufe innerhalb der beiden Fenster herangezogen. Es werden sowohl in dem Kalibrierungsfenster als auch in dem Offsetfenster jeweils Beschleunigungsvektoren gebildet, die sich aus einem x- und einem y-Anteil zum gleichen Zeitpunkt zusammensetzen. In Figur 3a sind dazu zwei Beschleunigungsvektoren aₜ₁ und aₜ₂, welche die Beschleunigungen zu zwei unterschiedlichen Zeitpunkten darstellen, exemplarisch für die gemessenen Beschleunigungsvektoren aus dem Kalibrierungsfenster abgebildet.

Die gemessenen Beschleunigungsvektoren aus dem Offsetfenster werden gemittelt, um dadurch einen Offsetvektor a_{O} (siehe Fig. 3a) zu erhalten, der den statischen Einfluss der Steigung/Neigung bzw. Querneigung (Gleisüberhöhung) des Gleises durch die Erdbeschleunigung eliminiert. Dieser Offsetvektor ao wird anschließend von den gemessenen Beschleunigungsvektoren (aₜ₁ und aₜ₂ in Fig. 3a) subtrahiert, um damit resultierende Beschleunigungsvektoren (aᵣ₁ und aᵣ₂ in Fig. 3b) zu erhalten, welche dadurch ausschließlich der Bremskraft in Längsrichtung x_{Fahrzeug} des Fahrzeugs entsprechen.

**Figur 4** zeigt die gleichen Beschleunigungsverläufe wie Figur 2, allerdings sind die in Figur 4 gezeigten Verläufe durch ein Tiefpassfilter gefiltert und durch Subtraktion des Offsetsektors bereits offsetkorrigiert. Außerdem stellt das vierte Diagramm nicht mehr wie in Figur 2 den Verlauf der Beschleunigung in z-Richtung des Sensors dar, sondern zeigt einen Verlauf eines Winkels, auf den im Folgenden noch genauer eingegangen wird. In den Verläufen ist sowohl das Kalibrierungsfenster als auch das Offsetfenster dargestellt. Innerhalb des Kalibrierungsfensters sind die zwei Zeitpunkte t₁ und t₂ entsprechend zu den Vektoren in den Figuren 3a und 3b beispielhaft angedeutet.

Nach der Bildung der resultierenden Beschleunigungsvektoren innerhalb des Kalibrierungsfensters wird zu jedem resultierenden Beschleunigungsvektor aᵣ (aᵣ₁ und aᵣ₂ in Fig. 3b) ein Winkel wᵣ (wᵣ₁ und wᵣ₂ in Fig. 3b) bestimmt, um den der zugehörige Beschleunigungsvektor von der x-Achse des Sensors, die auf die Längsachse des Fahrzeugs kalibriert werden soll, abweicht.

Der Verlauf des Winkels wᵣ über der Zeit ist in dem letzten Diagramm der Figur 4 abgebildet. Wie zu erkennen ist nimmt der Winkel wᵣ im gezeigten Beispiel einen vergleichsweise kleinen Wert an, was sich durch den hohen Anteil der gemessenen Beschleunigung in x-Richtung im Vergleich zum Anteil in y-Richtung begründen lässt. Durch Mittelwertbildung aller somit erhaltenen Winkel wᵣ innerhalb des Kalibrierungsfensters, kann ein gemittelter Winkel wₘ berechnet werden, um den das Koordinatensystem des Sensors um dessen z-Achse (Vertikalachse) gedreht werden muss damit die Orientierung der x-Achse des Sensors mit der Längsachse des Fahrzeugs übereinstimmt. Durch diese Drehung ist das Koordinatensystem des Sensors auf das Koordinatensystem des Fahrzeugs kalibriert.

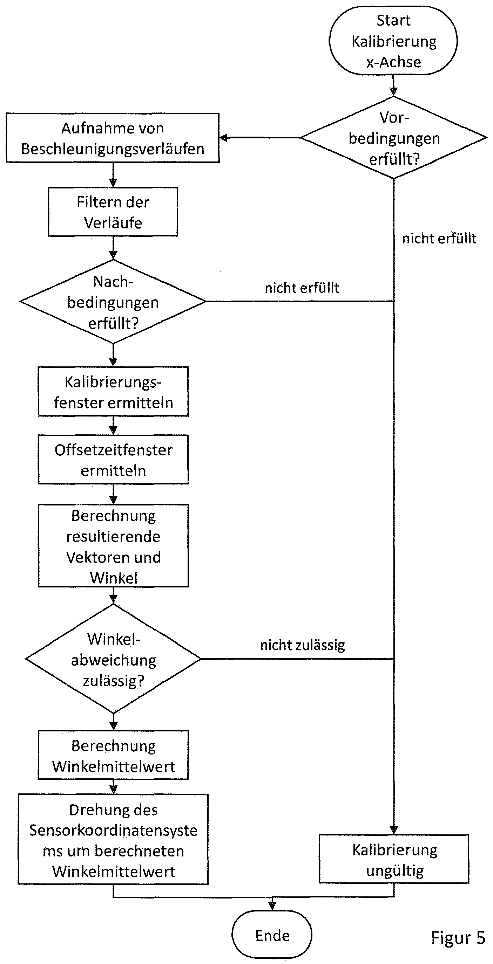

**Figur 5** zeigt ein Ablaufdiagramm zur Kalibrierung der x-Achse eines Beschleunigungssensors auf die Längsachse eines Schienenfahrzeugs nach einer Ausführungsform der Erfindung.

Nach dem Start der Kalibrierung der x-Achse, der durch einen Bediener oder durch eine vorgegebene Bedingung durch das System automatisch ausgelöst werden kann, wird zunächst überprüft, ob die Vorbedingungen für eine x-Achsenkalibrierung erfüllt sind. Diese sind beispielsweise, ob die Kalibrierung der z-Achse z_{Sensor} des Sensors auf die Vertikalachse des Schienenfahrzeugs z_{Fahrzeug} bereits erfolgt ist, die Geschwindigkeit v des Fahrzeugs schneller ist als eine geforderte Minimalgeschwindigkeit vₘᵢₙ, oder die vom Bremssystem angelegte Sollverzögerung eine Mindestsollverzögerung übersteigt. Sind die Vorbedingungen nicht erfüllt wird die Kalibrierung für ungültig erklärt und abgebrochen.

Sind die Vorbedingungen erfüllt, wird die Aufnahme von Beschleunigungsverläufen bei einer Fahrt mit niedriger Geschwindigkeit während eines Bremsvorgangs bis zum Stillstand auf einem beliebigen Streckenabschnitt durch den Beschleunigungssensor in allen drei Koordinatenrichtungen vorgenommen. Im Anschluss daran werden die gemessenen Beschleunigungsverläufe, beispielsweise durch einen Tiefpassfilter, gefiltert bevor überprüft wird, ob Gültigkeitsbedingungen der Messung erfüllt worden sind. Derartige Bedingungen (Nachbedingungen) sind beispielsweise, dass die Bremsung bis zum Stillstand des Fahrzeugs erfolgen muss, der Betrag der gemessenen Beschleunigungsvektoren at zu jedem Zeitpunkt größer ist als ein festgelegter Schwellwert aₘᵢₙ, beispielsweise 0,5m/s², oder im Stillstand der Betrag der gemessenen Beschleunigung nicht mehr als einen definierten Betrag von der Erdbeschleunigung abweicht. Sind die Nachbedingungen nicht erfüllt wird die Kalibrierung für ungültig erklärt und abgebrochen.

Sind die Nachbedingungen erfüllt, werden wie oben beschrieben ein Kalibrierungsfenster und ein Offsetfenster, beispielsweise in Abhängigkeit von einem Anhalteruck, festgelegt. In den jeweiligen Fenstern werden Beschleunigungsvektoren zu verschiedenen Zeitpunkten bestimmt, die sich jeweils aus einem Anteil in x-Richtung und einem Anteil in y-Richtung des Sensors zusammensetzen. Anschließend wird aus den Beschleunigungsvektoren innerhalb des Offsetfensters durch Mittelung ein Offsetvektor bestimmt, der daraufhin zur Korrektur der Beschleunigungsvektoren at aus dem Kalibrierungsfenster herangezogen wird. Die somit berechneten resultierenden Vektoren aᵣ stellen damit die Verzögerung des Fahrzeugs in dessen Längsrichtung dar. Im nächsten Schritt werden die zu den resultierenden Beschleunigungsvektoren aᵣ zugehörigen Winkel wᵣ zwischen der x-Achse des Sensors und den Vektoren aᵣ in der durch die x-Achse und die y-Achse aufgespannten Ebene berechnet.

In einem weiteren Schritt wird geprüft, ob die Abweichungen zwischen den resultierenden Winkeln wᵣ zweier beliebiger resultierender Vektoren aᵣ₁ und aᵣ₂ und die Abweichung der Vektorbeträge jeweils eine maximal zulässige Abweichung übersteigt. Ist dies der Fall wird die Kalibrierung für ungültig erklärt und abgebrochen.

Sind die Abweichungen in einem zulässigen Bereich werden die resultierenden Winkel wᵣ gemittelt und dadurch ein mittlerer Winkel wₘ berechnet. Um diesen wird abschließend das Koordinatensystem des Sensors gedreht, sodass die x-Achse x_{Sensor} des Sensors die gleiche Orientierung aufweist wie die Längsachse des Schienenfahrzeugs x_{Fahrzeug}.

Es sei angemerkt, dass eine Messwertaufnahme der Beschleunigungsverläufe anstelle bei einem Bremsvorgang bis zum Stillstand ebenso bei einem Beschleunigungsvorgang aus dem Stillstand mit entsprechend angepassten Randbedingungen vorgenommen werden kann, ohne dabei von dem Erfindungsgedanken des unabhängigen Verfahrensanspruchs abzuweichen.

### BEZUGSZEICHENLISTE

- 10: Zug
- 20: Gleis
- 30: Sensor
- x_{Sensor}: Längsrichtung des Sensors
- y_{Sensor}: Querrichtung des Sensors
- z_{Sensor}: Vertikalrichtung des Sensors
- x_{Fahrzeug}: Längsrichtung des Schienenfahrzeugs
- y_{Fahrzeug}: Querrichtung des Schienenfahrzeugs
- z_{Fahrzeug}: Vertikalrichtung des Schienenfahrzeugs
- v: Geschwindigkeit des Schienenfahrzeugs
- aₓ: Beschleunigung in Längsrichtung des Sensors
- a_{y}: Beschleunigung in Querrichtung des Sensors
- a_{z}: Beschleunigung in Vertikalrichtung des Sensors
- t: Zeit
- aₜ₁: Beschleunigungsvektor zum Zeitpunkt t1
- aᵣ: resultierender Beschleunigungsvektor
- a_{O}: Offsetvektor
- wᵣ: Winkel der resultierenden Beschleunigungsvektoren
- wₘ: gemittelter Winkel

## Patentansprüche

1. Verfahren zur Kalibrierung der Orientierung einer Längsachse (x_{Sensor}) und einer Querachse (y_{Sensor}) eines in einem Fahrzeug vorgesehenen Beschleunigungssensors (30) mit einem Koordinatensystem aus der Längsachse (xsensor), der Querachse (y_{Sensor}) und einer Vertikalachse (z_{Sensor}), wobei die Achsen jeweils aufeinander senkrecht stehen, aufweisend die folgenden Schritte:
(A) Messen der Beschleunigung entlang der Längs- und Querachse (x_{Sensor} bzw. y_{Sensor}) des Sensors (30) bei einem Bremsvorgang des Fahrzeugs (10) bei geringer Geschwindigkeit und im Stillstand über den zeitlichen Verlauf,
(B) Bestimmen eines Offsetvektors (a_{O}) im Stillstand, der sich aus einem Anteil in Richtung der Längsachse (x_{Sensor}) und einem Anteil in Richtung der Querachse (y_{Sensor}) des Sensors zusammensetzt und den Einfluss der Erdbeschleunigung auf die gemessene Beschleunigung des Fahrzeugs darstellt,
(C) Ermitteln von mindestens einem resultierenden Beschleunigungsvektor (aᵣ) durch Subtraktion des Offsetvektors (a_{O}) von dem mindestens einen gemessenen Beschleunigungsvektor (at), der sich aus je einer gemessenen Beschleunigung in Richtung der Längs- und Querachse (x_{Sensor} und y_{Sensor}) zu einem Zeitpunkt zusammensetzt,
(D) Transformation des Koordinatensystems des Sensors, so dass der mindestens eine resultierende Beschleunigungsvektor (aᵣ) in Fahrzeuglängsrichtung zeigt.

2. Verfahren gemäß dem vorhergehenden Anspruch, wobei zur Transformation des Koordinatensystems des Sensors in Verfahrensschritt (D) ein Winkel (wᵣ) zwischen der Längsachse des Sensors (x_{Sensor}) und dem mindestens einen resultierenden Beschleunigungsvektor (aᵣ) in der aus der Längsachse (x_{Sensor}) und Querachse (y_{Sensor}) des Sensors aufgespannten Ebene berechnet wird und das Koordinatensystem des Sensors um die bereits kalibrierte Vertikalachse des Sensors (z_{Sensor}) um den berechneten Winkel (wᵣ) gedreht wird.

3. Verfahren gemäß Anspruch 1, wobei zur Transformation des Koordinatensystems des Sensors (Verfahrensschritt (D) eine Rotationsmatrix für die Drehung des Koordinatensystems des Sensors um die Vertikalachse (z_{Sensor}) ermittelt wird, wobei sich die Rotationsmatrix dabei aus zu ermittelnden Einheitsvektoren des mindestens einen resultierenden Beschleunigungsvektors (aᵣ) in Richtung der Längs- und Querachse des Sensors zusammensetzt.

4. Verfahren gemäß einem der vorherigen Ansprüche, wobei vor Verfahrensschritt (A) eine Vertikalachse (z_{Sensor}) des Sensors (30), die auf der Längsachse (x_{Sensor}) und der Querachse (y_{Sensor}) des Sensors senkrecht steht, auf die Vertikalachse (z_{Fahrzeug}) des Fahrzeugs kalibriert wird.

5. Verfahren gemäß dem vorherigen Anspruch, wobei das Kalibrieren der Vertikalachse (z_{Sensor}) des Sensors auf einem nivellierten und/oder kalibrierten Messgleis und/oder bei Stillstand des Fahrzeugs (10) vorgenommen wird.

6. Verfahren gemäß einem der vorhergehenden Ansprüche, wobei sich der in Verfahrensschritt (C) ermittelte mindestens eine resultierende Beschleunigungsvektor (aᵣ) in einem Kalibrierungsfenster befindet, welches einen festgelegten Anfang und ein festgelegtes Ende aufweist, die zeitlich verschoben werden können, und/oder anhand des Anhalterucks des Fahrzeugs (10) bestimmt werden, und wobei jeder zur Kalibrierung herangezogene resultierende Beschleunigungsvektor (aᵣ) innerhalb des Kalibrierungsfensters liegt.

7. Verfahren gemäß einem der vorherigen Ansprüche, wobei zwischen den Verfahrensschritten (A) und (C) die gemessenen Beschleunigungsverläufe in Längs- und Querrichtung des Sensors, insbesondere durch einen Tiefpassfilter, gefiltert werden.

8. Verfahren gemäß einem der vorhergehenden Ansprüche, wobei in Verfahrensschritt (C) mehr als ein resultierender Beschleunigungsvektor (aᵣ) ermittelt wird, und demnach jeweils den ermittelten Vektoren entsprechende Winkel (wᵣ) berechnet werden, welche im Anschluss daran gemittelt werden, um einen gemittelten Winkel (wₘ) zu erhalten, und wobei das Koordinatensystem des Sensors anschließend um den berechneten gemittelten Winkel (wₘ) um die bereits kalibrierte Vertikalachse (z_{Fahrzeug}) des Sensors gedreht wird.

9. Verfahren gemäß einem der vorherigen Ansprüche, wobei in Verfahrensschritt (C) mehr als lediglich ein resultierender Beschleunigungsvektor (aᵣ) ermittelt wird und anschließend die einzeln ermittelten resultierenden Beschleunigungsvektoren (aᵣ) gemittelt werden, wobei die Transformation des Koordinatensystems des Sensors dann anhand des gemittelten resultierenden Beschleunigungsvektors erfolgt, so dass dieser in Fahrzeuglängsrichtung zeigt.

10. Verfahren gemäß einem der vorherigen Ansprüche, wobei der Offsetvektor (a_{O}) in Verfahrensschritt (C) durch Mittelwertbildung mehrerer erfasster Beschleunigungsvektoren (at), welche in einem beliebig festgelegten Offsetfenster aufgenommen werden, bestimmt wird, und wobei das Offsetfenster vorteilhafterweise durch den Anhalteruck des Fahrzeugs festgelegt wird.

11. Verfahren gemäß einem der vorherigen Ansprüche, wobei vor Verfahrensschritt (A) die Bedingungen geprüft werden, ob die Geschwindigkeit (v) des Fahrzeugs größer ist als eine festgelegte minimale Geschwindigkeit (vₘᵢₙ) und/oder die von einem Bremssystem des Fahrzeugs angelegte Sollverzögerung eine Mindestsollverzögerung übersteigt und/oder die Vertikalachse (z_{Sensor}) des Sensors bereits auf die Vertikalachse (z_{Sensor}) des Fahrzeugs kalibriert wurde, und falls einer dieser Bedingungen nicht erfüllt wird, die Kalibrierung nicht begonnen wird.

12. Verfahren gemäß einem der vorhergehenden Ansprüche, wobei nach Verfahrensschritt (A) die Bedingungen, dass jeder gemessene Beschleunigungsvektor (aₜ) zu jedem Zeitpunkt während der Messung des Beschleunigungsverlaufs bis nahe zum Stillstand einen Betrag hat, der größer ist als eine festgelegte minimale Beschleunigung (aₘᵢₙ) und/oder dass die Bremsung bis zum Stillstand des Fahrzeugs durchgeführt wird und/oder dass der im Stillstand ermittelte Betrag eines Beschleunigungsvektors um weniger als einen festgelegten Betrag von der Erdbeschleunigung abweicht, geprüft werden und falls wenigstens eine dieser Bedingungen nicht erfüllt wird, die Kalibrierung nicht fortgeführt wird.

13. Verfahren gemäß einem der vorhergehenden Ansprüche, wobei nach Verfahrensschritt (D) die Bedingungen, dass die Beträge zweier beliebiger resultierender Beschleunigungsvektoren (aᵣ₁) und (aᵣ₂) um weniger als einen festgelegten Betrag voneinander abweichen und/oder dass die in Verfahrensschritt (D) bestimmten Winkel (wᵣ) zweier beliebiger resultierender Beschleunigungsvektoren (aᵣ₁) und (aᵣ₂) um weniger als einen festgelegten Betrag voneinander abweichen, geprüft werden und falls wenigstens eine dieser Bedingungen nicht erfüllt ist, die Kalibrierung nicht fortgeführt wird.

14. Verfahren gemäß einem der vorangehenden Ansprüche, wobei die Messwertaufnahme entlang der Längsachse (x_{Sensor}) und der Querachse (y_{Sensor}) des Sensors gemäß dem Verfahrensschritt (A) beim Beschleunigen aus dem Stillstand vorgenommen wird und nicht beim Abbremsen aus niedrigen Geschwindigkeiten bis zum Stillstand.

15. Verfahren gemäß einem der vorhergehenden Ansprüche, wobei das Verfahren im regulären Betrieb stetig oder in festgelegten Intervallen durchgeführt wird.

16. Vorrichtung dazu konfiguriert das Verfahren gemäß Anspruch 1 durchzuführen, aufweisend:
eine Bedienungseinheit, dazu konfiguriert von einem Bediener bedient zu werden und Befehle entgegenzunehmen,
eine Speichereinheit, dazu konfiguriert die während dem Verfahren erhobenen Daten zu speichern,
eine Recheneinheit, dazu konfiguriert, die während dem Verfahren erhobenen Daten zu verarbeiten,
eine Datenschnittstelle, dazu konfiguriert sowohl die vom Sensor erfassten Daten aufzunehmen, als auch von der Vorrichtung ermittelte und/oder bearbeitete Daten an den Bediener oder andere Systeme auszugeben.

17. Computerprogrammprodukt dazu konfiguriert die Verfahrensschritte gemäß einem der vorangehenden Ansprüche 1 bis 12 automatisiert durchzuführen.

## Claims

1. Method for calibrating the orientation of a longitudinal axis (xₛₑₙₛₒᵣ) and a transverse axis (yₛₑₙₛₒᵣ) of an acceleration sensor (30) provided in a vehicle having a coordinate system made up of the longitudinal axis (xₛₑₙₛₒᵣ), the transverse axis (yₛₑₙₛₒᵣ) and a vertical axis (zₛₑₙₛₒᵣ), wherein the axes are each perpendicular to one another, having the following steps:
(A) measuring the acceleration along the longitudinal and transverse axis (xₛₑₙₛₒᵣ and yₛₑₙₛₒᵣ) of the sensor (30) during a braking procedure of the vehicle (10) at low velocity and at a standstill over the time curve,
(B) determining an offset vector (aₒ) at a standstill, which is composed of a component in the direction of the longitudinal axis (xₛₑₙₛₒᵣ) and a component in the direction of the transverse axis (yₛₑₙₛₒᵣ) of the sensor and represents the influence of the gravitational acceleration on the measured acceleration of the vehicle,
(C) ascertaining at least one resulting acceleration vector (aᵣ) by subtracting the offset vector (aₒ) from the at least one measured acceleration vector (aₜ) which is composed of a measured acceleration in the direction of each of the longitudinal and transverse axes (xsensor and yₛₑₙₛₒᵣ) at a point in time,
(D) transforming the coordinate system of the sensor, so that the at least one resulting acceleration vector (aᵣ) points in the vehicle longitudinal direction.

2. Method according to the preceding claim, wherein for transforming the coordinate system of the sensor in method step (D), an angle (wᵣ) between the longitudinal axis of the sensor (xₛₑₙₛₒᵣ) and the at least one resulting acceleration vector (aᵣ) in the plane spanned by the longitudinal axis (xₛₑₙₛₒᵣ) and transverse axis (yₛₑₙₛₒᵣ) of the sensor is calculated and the coordinate system of the sensor is rotated about the already calibrated vertical axis of the sensor (zₛₑₙₛₒᵣ) by the calculated angle (wᵣ).

3. Method according to claim 1, wherein for transforming the coordinate system of the sensor (method step (D)), a rotation matrix for the rotation of the coordinate system of the sensor around the vertical axis (zₛₑₙₛₒᵣ) is ascertained, wherein the rotation matrix is composed of unit vectors to be ascertained of the at least one resulting acceleration vector (aᵣ) in the direction of the longitudinal and transverse axes of the sensor.

4. Method according to any one of the preceding claims, wherein before method step (A), a vertical axis (zₛₑₙₛₒᵣ) of the sensor (30), which is perpendicular to the longitudinal axis (xₛₑₙₛₒᵣ) and the transverse axis (yₛₑₙₛₒᵣ) of the sensor, is calibrated on the vertical axis (z_{vehicle}) of the vehicle.

5. Method according to the preceding claim, wherein the calibration of the vertical axis (zₛₑₙₛₒᵣ) of the sensor is performed on a leveled and/or calibrated measurement track and/or at a standstill of the vehicle (10).

6. Method according to any one of the preceding claims, wherein the at least one resulting acceleration vector (aᵣ) ascertained in method step (C) is located in a calibration window which has a specified beginning and a specified end, which can be shifted in time, and/or are determined on the basis of the stopping jolt of the vehicle (10), and wherein each resulting acceleration vector (aᵣ) used for the calibration lies within the calibration window.

7. Method according to any one of the preceding claims, wherein between method steps (A) and (C), the measured acceleration curves are filtered in the longitudinal and transverse directions of the sensor, in particular by a low-pass filter.

8. Method according to any one of the preceding claims, wherein in method step (C), more than one resulting acceleration vector (aᵣ) is ascertained, and then angles (wᵣ) corresponding to each of the ascertained vectors are calculated, which are subsequently averaged to obtain an average
angle (wₘ), and wherein the coordinate system of the sensor is subsequently rotated by the calculated average angle (wₘ) around the already calibrated vertical axis (z_{vehicle}) of the sensor.

9. Method according to any one of the preceding claims, wherein in method step (C), more than only one resulting acceleration vector (aᵣ) is ascertained and subsequently the individually ascertained resulting acceleration vectors (aᵣ) are averaged, wherein the transformation of the coordinate system of the sensor then takes place on the basis of the average resulting acceleration vector, so that it points in the vehicle longitudinal direction.

10. Method according to any one of the preceding claims, wherein the offset vector (aₒ) in method step (C) is specified by averaging multiple detected acceleration vectors (at), which are recorded in an arbitrarily specified offset window, and wherein the offset window is advantageously specified by the stopping jolt of the vehicle.

11. Method according to any one of the preceding claims, wherein before method step (A), the conditions are checked as to whether the velocity (v) of the vehicle is greater than a specified minimum velocity (vₘᵢₙ) and/or the target deceleration applied by a braking system of the vehicle exceeds a minimum target braking and/or the vertical axis (zₛₑₙₛₒᵣ) of the sensor was already calibrated on the vertical axis (zₛₑₙₛₒᵣ) of the vehicle, and if one of these conditions is not met, the calibration is not begun.

12. Method according to any one of the preceding claims, wherein after method step (A), the conditions that each measured acceleration vector(aₜ), at every point in time during the measurement of the acceleration curve down to close to a standstill, has an absolute value which is greater than a specified minimal acceleration (amin) and/or that the braking is carried out until a standstill of the vehicle and/or that the absolute value of an acceleration vector ascertained at a standstill deviates by less than a specified absolute value from the gravitational acceleration, are checked and if at least one of these conditions is not met, the calibration is not continued.

13. Method according to any one of the preceding claims, wherein after method step (D), the conditions that the absolute values of two arbitrary resulting acceleration vectors (aᵣ₁) and (aᵣ₂) deviate from one another by less than a specified absolute value, and/or that the angles (wᵣ) determined in method step (D) of two arbitrary resulting acceleration vectors (aᵣ₁) and (aᵣ₂) deviate from one another by less than a specified absolute value, are checked and if at least one of these conditions is not met, the calibration is not continued.

14. Method according to any one of the preceding claims, wherein the measured value recording along the longitudinal axis (xₛₑₙₛₒᵣ) and the transverse axis (yₛₑₙₛₒᵣ) of the sensor according to method step (A) is performed during accelerations from a standstill and not during deceleration from low velocity values to a standstill.

15. Method according to any one of the preceding claims, wherein the method is carried out continuously or at specified intervals in regular operation.

16. Device configured to carry out the method according to claim 1, having:
an operating unit configured to be operated by an operator and to accept commands,
a memory unit configured to store the data collected during the method,
a processing unit configured to process the data collected during the method,
a data interface configured both to record the data detected by the sensor and also to output data ascertained and/or processed by the device to the operator or other systems.

17. Computer program product configured to automatically carry out the method steps according to any one of preceding claims 1 to 12.

## Revendications

1. Procédé d'étalonnage de l'orientation d'un axe longitudinal (xₛₑₙₛₒᵣ) et d'un axe transversal (yₛₑₙₛₒᵣ) d'un capteur d'accélération (30) prévu dans un véhicule avec un système de coordonnées composé de l'axe longitudinal (x_{capteur}), de l'axe transversal (yₛₑₙₛₒᵣ) et d'un axe vertical (zₛₑₙₛₒᵣ), dans lequel les axes se trouvent respectivement perpendiculaires les uns aux autres, présentant les étapes suivantes :
(A) la mesure de l'accélération le long de l'axe longitudinal et transversal (xₛₑₙₛₒᵣ ou yₛₑₙₛₒᵣ) du capteur (30) lors d'un processus de freinage du véhicule (10) à faible vitesse et à l'arrêt au cours de l'évolution dans le temps,
(B) la détermination d'un vecteur de décalage (aₒ) à l'arrêt qui se compose d'un composant en direction de l'axe longitudinal (x_{capteur}) et d'un composant en direction de l'axe transversal (y_{capteur}) du capteur et représente l'influence de l'accélération due à la pesanteur sur l'accélération mesurée du véhicule,
(C) le calcul d'au moins un vecteur d'accélération (aᵣ) résultant en soustrayant le vecteur de décalage (aₒ) de l'au moins un vecteur d'accélération (aₜ) mesuré, qui se compose chacun d'une accélération mesurée en direction de l'axe longitudinal et transversal (x_{capteur} et y_{capteur}) à un moment dans le temps,
(D) la transformation du système de coordonnées du capteur de sorte que l'au moins un vecteur d'accélération (aᵣ) résultant soit dirigé dans le sens longitudinal du véhicule.

2. Procédé selon la revendication précédente, dans lequel pour la transformation du système de coordonnées du capteur dans l'étape de procédé (D), un angle (wᵣ) entre l'axe longitudinal du capteur (x_{capteur}) et l'au moins un vecteur d'accélération (aᵣ) résultant dans le plan défini à partir de l'axe longitudinal (x_{capteur}) et l'axe transversal (y_{capteur}) est calculé et le système de coordonnées du capteur est tourné autour de l'axe vertical déjà étalonné du capteur (z_{capteur}) selon l'angle calculé (wᵣ).

3. Procédé selon la revendication 1, dans lequel pour la transformation du système de coordonnées du capteur (étape de procédé (D), une matrice de rotation pour la rotation du système de coordonnées du capteur autour de l'axe vertical (z_{capteur}) est calculée, dans lequel la matrice de rotation se compose de vecteurs d'unité à calculer de l'au moins un vecteur d'accélération aᵣ) résultant en direction de l'axe longitudinal et transversal du capteur.

4. Procédé selon l'une quelconque des revendications précédentes, dans lequel avant l'étape de procédé (A), un axe vertical (z_{capteur}) du capteur (30) qui est perpendiculaire à l'axe longitudinal (x_{capteur}) et à l'axe transversal (y_{capteur}) du capteur, est étalonné sur l'axe vertical (z_{véhicule}) du véhicule.

5. Procédé selon la revendication précédente, dans lequel l'étalonnage de l'axe vertical (z_{capteur}) du capteur est entrepris sur une voie de mesure nivelée et/ou étalonnée et/ou à l'arrêt du véhicule (10).

6. Procédé selon l'une quelconque des revendications précédentes, dans lequel le au moins un vecteur d'accélération (aᵣ) résultant calculé dans l'étape de procédé (C) se trouve dans une fenêtre d'étalonnage qui présente un début fixé et une fin fixée qui peuvent être décalés dans le temps, et/ou sont déterminés à l'aide du coup d'arrêt du véhicule (10), et dans lequel chaque vecteur d'accélération (aᵣ) résultant utilisé pour l'étalonnage se trouve à l'intérieur de la fenêtre d'étalonnage.

7. Procédé selon l'une quelconque des revendications précédentes, dans lequel les variations d'accélération mesurées dans le sens longitudinal et transversal du capteur sont filtrées en particulier par un filtre passe-bas entre les étapes de procédé (A) et (C).

8. Procédé selon l'une quelconque des revendications précédentes, dans lequel dans l'étape de procédé (C), plus d'un vecteur d'accélération (aᵣ) résultant est calculé, et des angles (wᵣ) correspondant à chacun des vecteurs calculés sont calculés, dont la moyenne est ensuite déterminée afin d'obtenir un
angle wₘ) moyen, et dans lequel le système de coordonnées du capteur est ensuite tourné selon l'angle (wₘ) moyen calculé autour de l'axe vertical (z_{véhicule}) déjà étalonné du capteur.

9. Procédé selon l'une quelconque des revendications précédentes, dans lequel dans l'étape de procédé (C), plus d'un simple vecteur d'accélération (aᵣ) résultant est calculé et ensuite la moyenne des vecteurs d'accélération (aᵣ) résultants calculés individuellement est ensuite déterminée, dans lequel la transformation du système de coordonnées du capteur est alors effectuée à l'aide du vecteur d'accélération résultant moyen, de sorte » que celui-ci soit dirigé dans le sens longitudinal du véhicule.

10. Procédé selon l'une quelconque des revendications précédentes, dans lequel le vecteur de décalage (aₒ) est déterminé dans l'étape de procédé (C) par détermination de la moyenne de plusieurs vecteurs d'accélération (aₜ) détectés qui sont reçus dans une fenêtre de décalage fixée de manière arbitraire, et dans lequel la fenêtre de décalage est avantageusement fixée par le coup d'arrêt du véhicule.

11. Procédé selon l'une quelconque des revendications précédentes, dans lequel avant l'étape de procédé (A), les conditions sont vérifiées quant à savoir si la vitesse (v) du véhicule est supérieure à une vitesse minimale fixée (vₘᵢₙ) et/ou la décélération de consigne appliquée par un système de freinage du véhicule dépasse une décélération de consigne minimale et/ou l'axe vertical (z_{capteur}) du capteur a déjà été étalonné sur l'axe vertical (z_{capteur}) du véhicule, et si une de ces conditions n'est pas remplie, l'étalonnage n'est pas commencé.

12. Procédé selon l'une quelconque des revendications précédentes, dans lequel après l'étape de procédé (A), les conditions selon lesquelles chaque vecteur d'accélération (aₜ) mesuré à chaque moment dans le temps pendant la mesure de l'évolution de l'accélération presque jusqu'à l'arrêt présente une valeur qui est supérieure à une accélération minimale fixée (amin) et/ou en ce que le freinage est réalisé jusqu'à l'arrêt du véhicule et/ou que la valeur calculée à l'arrêt d'un vecteur d'accélération diverge de moins d'une valeur fixée de l'accélération de la pesanteur sont vérifiées et si au moins une des ces conditions n'est pas remplie, l'étalonnage n'est pas poursuivi.

13. Procédé selon l'une quelconque des revendications précédentes, dans lequel après l'étape de procédé (D), les conditions selon lesquelles les valeurs de deux vecteurs d'accélération (aᵣ₁) et (aᵣ₂) résultants quelconques divergent l'une de l'autre de moins d'une valeur fixée et/ou en ce que les angles (wᵣ) déterminés dans l'étape de procédé (D) de deux vecteurs d'accélération (aᵣ₁) et (aᵣ₂) résultants quelconques divergent l'un de l'autre de moins d'une valeur fixée sont vérifiées et si au moins une des ces conditions n'est pas remplie, l'étalonnage n'est pas poursuivi.

14. Procédé selon l'une quelconque des revendications précédentes, dans lequel l'enregistrement de valeur de mesure le long de l'axe longitudinal (x_{capteur} et de l'axe transversal (y_{capteur}) du capteur selon l'étape de procédé (A) est entrepris lors d'accélérations à partir de l'arrêt et pas lors de décélérations à partir de vitesses faibles jusqu'à l'arrêt.

15. Procédé selon l'une quelconque des revendications précédentes, dans lequel le procédé est réalisé en permanence ou à intervalles fixés en fonctionnement régulier.

16. Dispositif configuré afin de réaliser le procédé selon la revendication 1, présentant :
une unité de manipulation configurée pour être manipulée par un utilisateur et recevoir des ordres,
une unité de mémoire configurée pour enregistrer les données recueillies pendant le procédé,
une unité de calcul configurée pour traiter les données recueillies pendant le procédé,
une interface de données configurée afin de recevoir non seulement les données détectées par le capteur mais aussi de délivrer des données calculées et/ou traitées par le dispositif à l'utilisateur ou à d'autres systèmes.

17. Produit de programme informatique configuré pour réaliser de manière automatisée les étapes de procédé selon l'une quelconque des revendications précédentes 1 à 12.
